# EUROPEAN PATENT SPECIFICATION

(11) **EP 1 921 336 B1**
(45) Date of publication and mention of the grant of the patent: **04.03.2009**
(21) Application number: 07103555.4
(22) Date of filing: 06.03.2007
(51) Int. Cl.: F16D 1/08, F16D 1/112

(54) **Fast-coupling device**
Schnellkupplungsvorrichtung
Dispositif à raccordement rapide

(30) Priority: 17.10.2006 IT TO20060746
(43) Date of publication of application: 14.05.2008
(73) Proprietor: Arol S.p.A., 14053 Canelli (Asti) (IT)
(72) Inventor: Cirio, Sergio c/o AROL Spa, I-14053, Canelli (Asti) (IT)
(74) Representative: Marchitelli, Mauro

(56) References cited:
- CH-A5- 694 133
- DE-B- 1 202 074
- FR-A- 2 080 118
- GB-A- 995 641
- GB-A- 2 147 086
- JP-A- 61 059 021
- US-A- 4 247 216
- US-A- 4 422 794

## Description

The present invention relates to a fast-coupling device for coupling two separable components to one another. The most relevant prior art is disclosed in US-A-4247216.

In many sectors of the art, there is the need to couple separable components, one of which is replaceable, to one another. The invention has been developed in particular in view of its application to capping machines. Usually, capping machines can be configured for operating with containers and with tops of different shapes and dimensions. To make possible operation of the machine with tops and containers of different types, it is necessary to replace some components. For example, in a capping head it is necessary to replace the gripping cone that couples with the top part of the bottles.

The purpose of the present invention is to provide a fast-coupling device which will enable coupling and uncoupling of two components to/from one another in a particularly simple and fast way and without the use of tools.

According to the present invention, said purpose is achieved by a fast-coupling device having the characteristics forming the subject of the claims.

The present invention will now be described in detail with reference to the attached plate of drawings, which is provided purely by way of nonlimiting example and in which:
- Figure 1 is a partially sectioned side view of a head of a capping machine provided with a fast-coupling device according to the present invention;

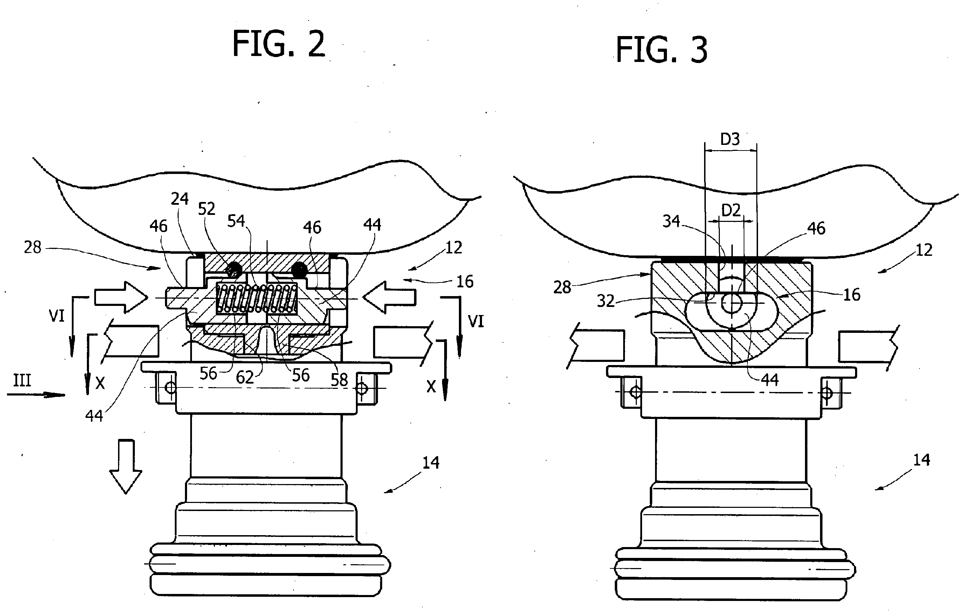

- Figure 2 is a partially sectioned view at an enlarged scale of the part indicated by the arrow II in Figure 1;
- Figure 3 is a partially sectioned front view according to the arrow III of Figure 2;
- Figures 4 and 5 are partially sectioned views corresponding to Figures 2 and 3 and illustrating the members of the fast-coupling device uncoupled from one another;
- Figure 6 is a cross section according to the line VI-VI of Figure 2;
- Figures 7 and 8 are sections according to the lines VII-VII and VIII-VIII of Figure 4;
- Figure 9 is a perspective view of the element indicated by the arrow IX in Figure 4;
- Figure 10 is a cross section according to the line X-X of Figure 2; and
- Figure 11 is a cross section illustrating a variant of the part indicated by the arrow XI in Figure 5.

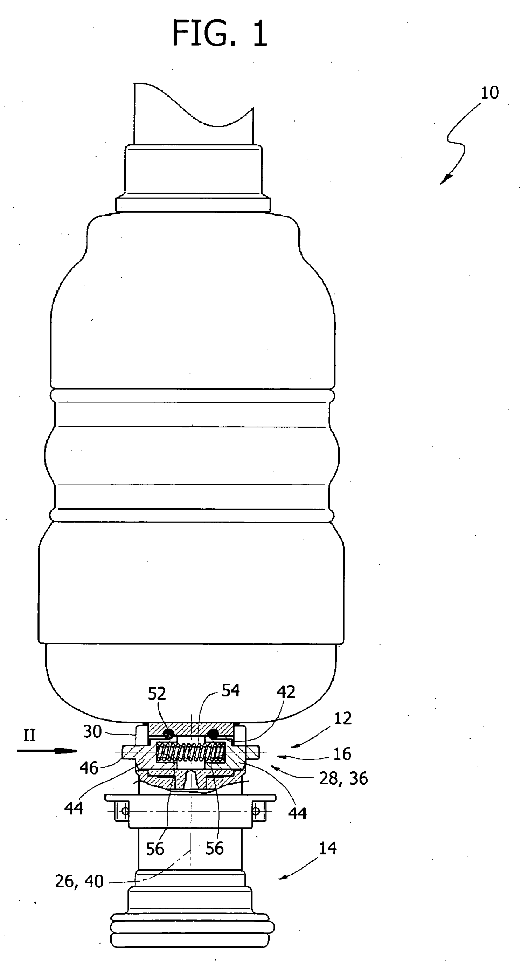

With reference to Figure 1, the number 10 designates the terminal part of a capping head. The head 10 is provided with a movement of translation in the vertical direction and with a movement of rotation about the same vertical axis. The head 10 comprises a terminal member 12, on which a removable member 14 is mounted, constituted, for example, by a cone for gripping a bottle or similar container. The terminal member 12 and the removable member 14 are connected to one another by means of a fast-coupling device 16.

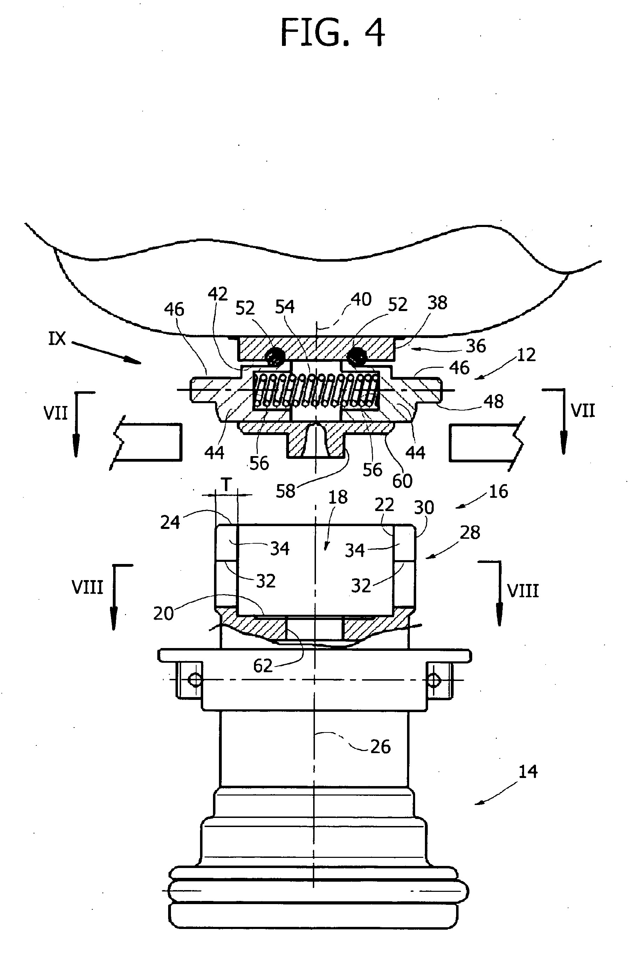

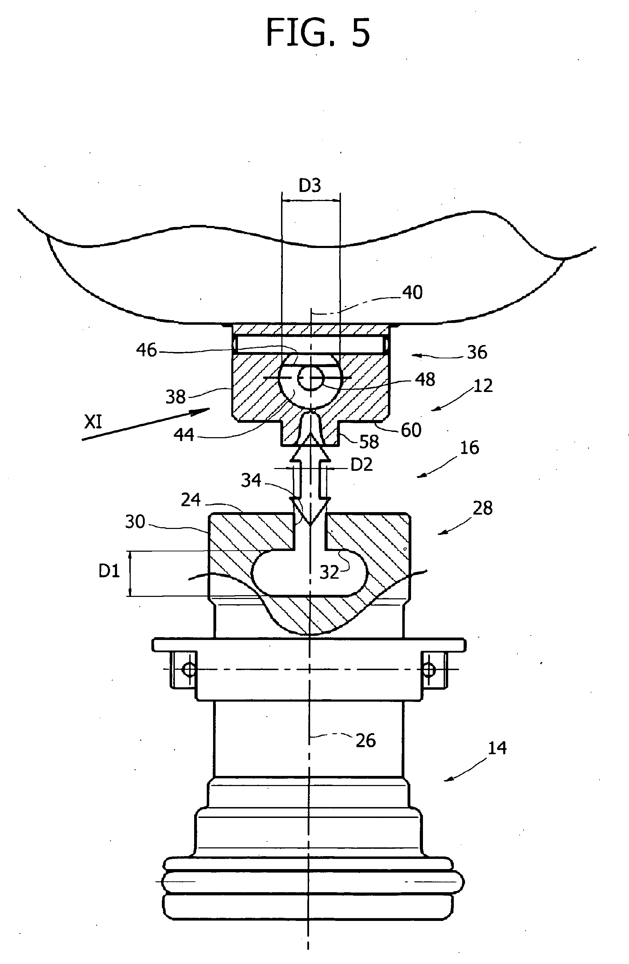

With reference to Figures 4 and 5, the removable member 14 has a coupling section 28, in which a coupling seat 18 is formed having an end wall 20 and a side wall 22. The side wall 22 is open on a front edge 24. The removable member 14 has an axis of longitudinal symmetry 26, and the coupling seat 18 is symmetrical with respect to said axis. The coupling seat 18 is surrounded by a wall 30 having a thickness T in the direction orthogonal to the axis 26.

In the wall 30 of the coupling section 28, two slots are made as through slots 32, elongated in the tangential direction. The slots 32 have a height designated by D1 in Figure 5. Each of the slots 32 communicates with the front edge 24 of the coupling section 28 via a respective through groove 34.

Once again with reference to Figures 4 and 5, the terminal member 12 comprises a coupling section 36, designed to couple with the coupling section 28 of the removable member 14. The coupling section 36 has an external surface 38, which establishes a shape fit with the internal surface 22 of the removable member 14. The coupling section 36 is symmetrical with respect to a longitudinal axis 40, which, in the condition of coupling, is aligned to the longitudinal axis 26 of the removable member 14.

The coupling section 36 of the terminal member 12 has a transverse hole 42, orthogonal with respect to the longitudinal axis 40. The hole 42 is a through hole, and its ends give out onto the external surface 38 in positions diametrally opposite to one another.

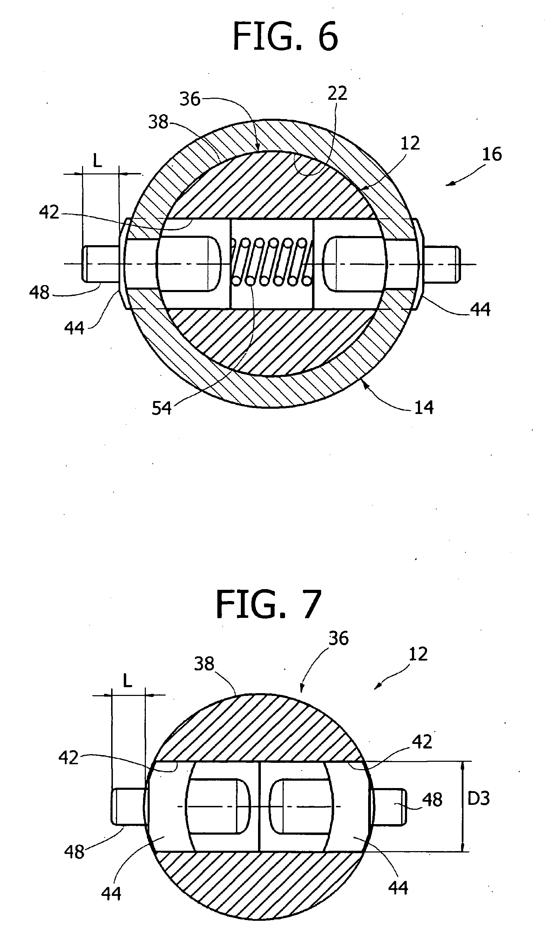

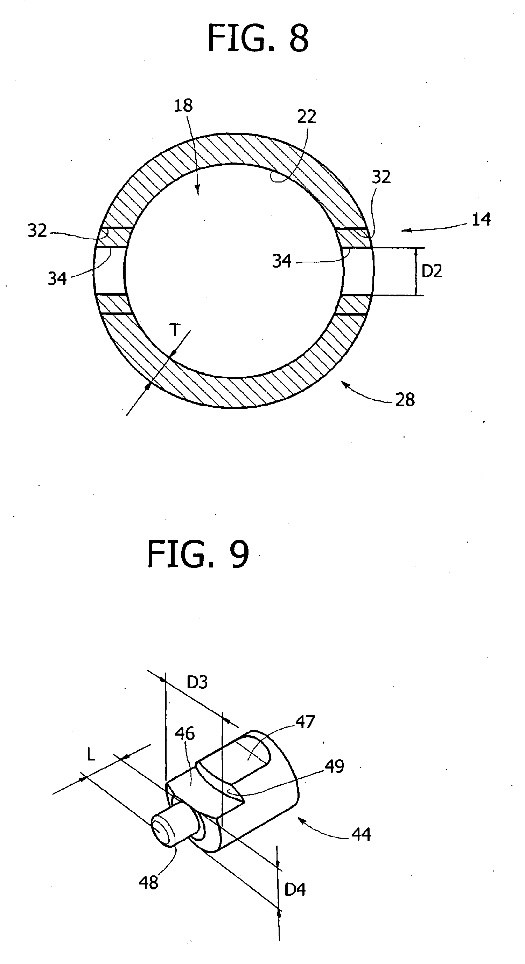

Two clamping members 44 are mounted so that they can slide in the hole 42. With reference to Figures 6, 7 and 9, each clamping member 44 has the form of a pin with circular cross section with diameter D3, in which two parallel flattened areas 46, 47 are formed. The width D3 of each clamping member 44 is greater than the width D2 of the respective through groove 34.

The height of the clamping member 44 in a position corresponding to the bottom flattened area 46, designated by D4, is slightly smaller than the height D1 of the groove 32, in such a way that the contact between the clamping member 44 and the removable member 14 is concentrated on the top edge of the slot 32. This is advantageous since, from the technological standpoint, it is more convenient to have an exact fit only between the top edge of the slot 32 and the surface 46 of the clamping member 44. Between the two flattened areas 46, 47 a step is formed having a cylindrical front surface 49 with radius equal to the radius of the internal surface 22 of the seat 18.

Each clamping member 44 has, at its external end, an actuation portion 48, which has a diameter equal to or smaller than the width D2 of the groove 34 of the removable member 14. The length L of the actuation portion 48 is equal to or greater than the thickness T of the wall 32 of the removable member 14. Each clamping member 44 is mobile in the hole 42 between an extracted position and a retracted position.

The radiused terminal part of the top flattened area 47 of each clamping member 44 co-operates with a fixed pin 52 defining a contrast arrest surface, which prevents exit of the clamping member 44 from the hole 42. A helical compression spring 54 pushes the two clamping members 44 towards the outside of the hole 42. The ends of the spring 54 are preferably housed within corresponding blind seats 56 of the clamping members 44.

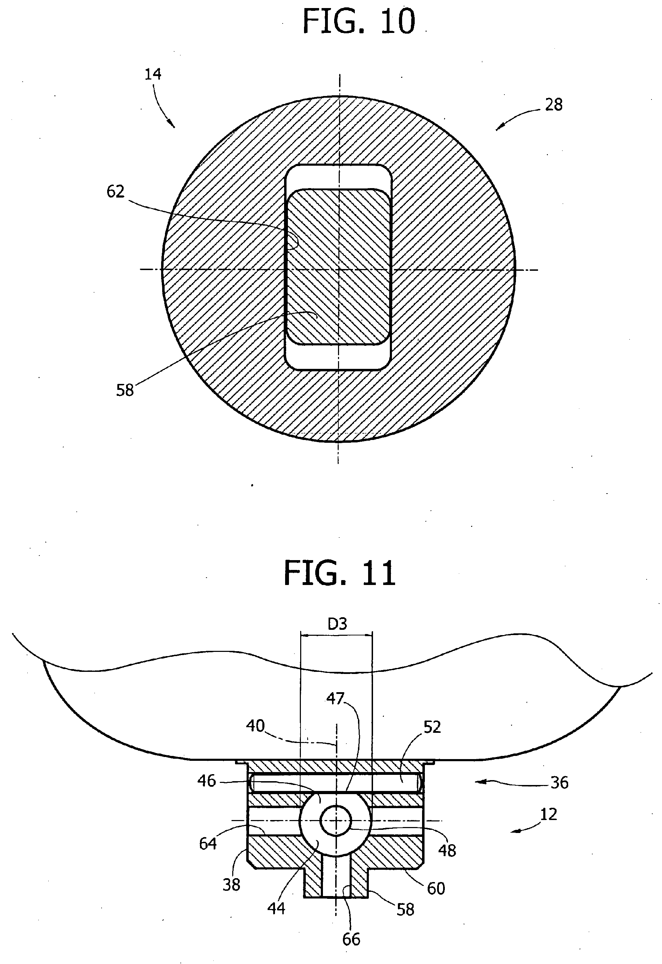

In general, the screwing heads have the purpose of transmitting a torque on a cap, so that, if the head is provided with a fast coupling, it is necessary to have a coupling capable of transmitting torque. For this purpose, with reference to Figures 4 and 10, the terminal member 12 is provided with an axial protuberance 58, which projects from a front wall 60. The protuberance 58 has a polygonal profile, for instance rectangular, as illustrated in Figure 10. The protuberance 58 engages a cavity 62 with a corresponding shape provided in the coupling section 28 of the removable member 14.

The operation of the fast-coupling device according to the invention will now be described starting from the configuration in which the removable member 14 is separated from the terminal member 12 (Figures 4 and 5).

To connect the removable member 14 to the terminal member 12, a pressure is exerted on the actuation portions 48 of the two clamping members 44 set opposite to one another, by simultaneously pushing the two clamping members 44 towards the inside of the hole 42. By keeping the clamping members 44 pressed inwards, the removable member 14 approaches the terminal member 12 in the direction of the longitudinal axes 26, 40. The surface 38 of the terminal member 12 inserts in the seat 18 of the removable member 14. During this insertion, the grooves 34 are aligned to the actuation portions 48 of the clamping members 44.

Once insertion is completed, the clamping members 44 are released and, under the action of the spring 54, are brought back into their extracted position. In this position, the flattened areas 46 of the clamping members 44 engage the internal top edges of the respective slots 32. At this point assembly is completed.

To remove the removable member 14, the procedure is reversed; i.e., the clamping members 44 are pushed inwards, and the seat 18 disengages from the surface 38 with a movement in the axial direction of the removable member 14.

The clamping members 44 connect the removable member 14 to the terminal member 12 in the vertical direction, whilst the rotational coupling for transmission of torque is obtained thanks to the engagement between the protuberance 58 and the seat 62. The constraint in the vertical direction obtained by means of the clamping members 44 is intrinsically secure since, even in the case of loss of the pins 56 during operation, the surface 49 of each clamping member 44 rests against the surface 18, preventing the clamping member 44 from sliding out. It would of course be possible to reunite the rotational coupling and the axial coupling by replacing the slots 32 with holes with circular cross section, which establish a shape fit with the external surfaces of the clamping members. This involves, however, greater technological difficulties.

The details of construction and the embodiments of the fast-coupling device according to the present invention may vary with respect to what is illustrated in the figures. The surfaces of mutual coupling 22, 38 can be cylindrical or else have the shape of a truncated cone. Said surfaces of coupling can have a circular or else a polygonal cross section.

The slots 32 could be replaced by openings of any shape, for instance circular.

In the case where the removable member 14 is to be mounted on the terminal member 12 with a pre-set orientation, the two slots 32 of the removable member 14 can be envisaged with shape or dimensions different from one another. In this case, the clamping members 44 will have shape and dimensions complementary to those of the respective slots 32.

Illustrated in the figures is the case where the fast-coupling device comprises two clamping members 44 arranged in positions diametrally opposite to one another. The number of the clamping members may vary according to the requirements. For instance, there could be provided just one clamping member 44, or else three or more clamping members could be provided. Each clamping member could be associated to a respective spring, or else a single elastic element could be provided co-operating with all the clamping members.

With reference to Figure 11, in a variant of the present invention the coupling section 36 of the terminal member 12 is provided with two holes 64, 66 with mutually orthogonal axes. The first hole 64 is a through hole and extends in a transverse direction with respect to the hole 42 in which the clamping members are mounted. The second hole 66 extends in an axial direction and communicates at the top with the first hole 64 and at the bottom with the outside. Said holes enable washing of the internal parts of the terminal member 12. In fact, the holes 64 and 66 enable entry and subsequent draining-off of the washing liquid.

## Claims

1. A fast-coupling device (16) for mutual connection of two coupleable members (12, 14), which can be separated from one another and are provided with respective coupling sections (28, 36),
said device being **characterized in that** a first of said coupleable members (14) has at least one through transverse opening (32), which communicates with a front edge (24) of the coupleable member (14) by means of a disengagement groove (34) having a width (D2) smaller than the width of said opening (32), and **in that** the second coupleable member (12) comprises at least one clamping member (44), which is mobile in a hole (42) between an extracted position and a retracted position and is pushed elastically towards its extracted position, said clamping member (44) having a surface (46), which engages said opening (32) of the first coupleable member (14), each clamping member (44) having an actuation portion (48) with a dimension equal to or smaller than the width (D2) of said disengagement groove (34).

2. The device according to Claim 1, **characterized in that** said coupling sections (28, 36) are provided with respective formations (58, 62) in mutual contact of transmission of torque.

3. The device according to Claim 1, **characterized in that** said clamping member (44) provides an axial connection of said coupleable members (12, 14).

4. The device according to Claim 1, **characterized in that** the actuation portion (48) of said clamping member (44) has a length (L) equal to or greater than the thickness (T) of said opening (32).

5. The device according to Claim 1, **characterized in that** the mutual-coupling sections (28, 36) of the two coupleable members (14, 12) co-operate with one another to establish a shape fit.

6. The device according to Claim 1, **characterized in that** the coupling section (28) of the first coupleable member (14) has a seat (18) with a side wall (30) in which said through opening (32) is made.

7. The device according to Claim 1, **characterized in that** it comprises at least two clamping members (44) diametrally opposite to one another and pushed towards the outside of the cross section of coupling (12) by elastic compression means (54).

8. The device according to Claim 1, **characterized in that** the coupling section (36) of one of said coupleable members (12) is provided with holes (64, 66) for entry and exit of washing liquid.

9. The device according to Claim 1, **characterized in that** the clamping member (44) comprises a cylindrical front surface (49), which prevents exit of the clamping member (44) from the respective hole (42) when the coupleable members (12, 14) are connected to one another.

## Patentansprüche

1. Schnellkupplungsvorrihtung (16) zum Verbinden zweier zu kuppelnde Elemente (12, 14) miteinander, die voneinander getrennt werden können und mit jeweiligen Kupplungsabschnitten (28, 36) versehen sind,
wobei die Vorrichtung **dadurch gekennzeichnet ist, dass** ein erstes der zu kuppelnden Elemente (14) wenigstens eine Quer-Durchgangsöffnung (32) hat, die mit einem vorderen Rand (24) des zu kuppelnden Elementes (14) über eine Trennnut (34) in Verbindung steht, die eine Breite (D2) hat, die kleiner ist als die Breite der Öffnung (32), und dadurch, dass das zweite zu kuppelnde Element (12) wenigstens ein Klemmelement (44) umfasst, das in einem Loch (42) zwischen einer herausgezogenen und einer eingeschobenen Position bewegt werden kann und elastisch auf seine herausgezogene Position zu gedrückt wird, wobei das Klemmelement (44) eine Fläche (46) hat, die in die Öffnung (32) des ersten zu kuppelnden Elementes (14) eingreift, und jedes Klemmelement (44) einen Betätigungsabschnitt (48) mit einer Abmessung hat, die der Breite (D2) der Trennnut (34) entspricht oder kleiner ist als diese.

2. Vorrichtung nach Anspruch 1, **dadurch gekennzeichnet, dass** die Kupplungsabschnitte (28, 36) mit jeweiligen Strukturen (58, 62) versehen sind, die zum Übertragen von Drehmoment in Kontakt miteinander sind.

3. Vorrichtung nach Anspruch 1, **dadurch gekennzeichnet, dass** das Klemmelement (44) eine axiale Verbindung der zu kuppelnden Elemente (12, 14) schafft.

4. Vorrichtung nach Anspruch 1, **dadurch gekennzeichnet, dass** der Betätigungsabschnitt (48) des Klemmelementes (44) eine Länge (L) hat, die der Dicke (T) der Öffnung (32) entspricht oder größer ist als diese.

5. Vorrichtung nach Anspruch 1, **dadurch gekennzeichnet, dass** die Abschnitte (28, 36) der zwei zu kuppelnden Elemente (14, 12) zum gegenseitigen Kuppeln so miteinander zusammenwirken, dass ein Formschluss erzeugt wird.

6. Vorrichtung nach Anspruch 1, **dadurch gekennzeichnet, dass** der Kupplungsabschnitt (28) des ersten zu kuppelnden Elementes (14) eine Aufnahme (18) mit einer Seitenwand (30) hat, in der die Durchgangsöffnung (32) hergestellt ist.

7. Vorrichtung nach Anspruch 1, **dadurch gekennzeichnet, dass** sie wenigstens zwei Klemmelemente (44) umfasst, die einander diametral gegenüberliegen und durch elastische Druckeinrichtungen (54) zur Außenseite des Querschnitts der Kupplung (12) hin gedrückt werden.

8. Vorrichtung nach Anspruch 1, **dadurch gekennzeichnet, dass** der Kupplungsabschnitt (36) eines der zu kuppelnden Elemente (12) mit Löchern (64, 66) zum Eintreten und Austreten von Spülflüssigkeit versehen ist.

9. Vorrichtung nach Anspruch 1, **dadurch gekennzeichnet, dass** das Klemmelement (44) eine zylindrische Vorderseite (49) umfasst, die Austreten des Klemmelementes (44) aus dem jeweiligen Loch (42) verhindert, wenn die zu kuppelnden Elemente (12, 14) miteinander verbunden sind.

## Revendications

1. Dispositif de raccordement rapide (16) pour la connexion mutuelle de deux éléments pouvant être raccordés (12, 14), qui peuvent être séparés l'un de l'autre et sont pourvus de sections de raccordement respectives (28, 36),
ledit dispositif étant **caractérisé en ce qu'**un premier desdits éléments pouvant être raccordés (14) possède au moins une ouverture transversale débouchante (32), qui communique avec un bord avant (24) de l'élément pouvant être couplé (14) au moyen d'une rainure de désengagement (34) possédant une largeur (D2) inférieure à la largeur de ladite ouverture (32), et **en ce que** le second élément pouvant être couplé (12) comprend au moins un élément de serrage (44), qui est mobile dans un trou (42) entre une position extraite et une position rétractée et est poussé de façon élastique vers sa position extraite, ledit élément de serrage (44) possédant une surface (46), qui coopère avec ladite ouverture (32) du premier élément pouvant être couplé (14), chaque élément de serrage (44) possédant une partie d'actionnement (48) avec une dimension égale ou inférieure à la largeur (D2) de ladite rainure de désengagement (34).

2. Dispositif selon la revendication 1, **caractérisé en ce que** lesdites sections de raccordement (28, 36) sont pourvues de formations respectives (58, 62) en contact mutuel de transmission de couple.

3. Dispositif selon la revendication 1, **caractérisé en ce que** ledit élément de serrage (44) fournit une connexion axiale desdits éléments pouvant être raccordés (12, 14).

4. Dispositif selon la revendication 1, **caractérisé en ce que** la partie d'actionnement (48) dudit élément de serrage (44) possède une longueur (L) égale ou supérieure à l'épaisseur (T) de ladite ouverture (32).

5. Dispositif selon la revendication 1, **caractérisé en ce que** les sections de raccordement mutuel (28, 36) des deux éléments pouvant être raccordés (14, 12) coopèrent l'une avec l'autre pour établir un ajustement de forme.

6. Dispositif selon la revendication 1, **caractérisé en ce que** la section de raccordement (28) du premier élément pouvant être couplé (14) possède un siège (18) avec une paroi latérale (30) dans laquelle est réalisée ladite ouverture débouchante (32).

7. Dispositif selon la revendication 1, **caractérisé en ce qu'**il comprend au moins deux éléments de serrage (44) diamétralement opposés l'un à l'autre et poussés vers l'extérieur de la section transversale de raccordement (12) par des moyens de compression élastiques (54).

8. Dispositif selon la revendication 1, **caractérisé en ce que** la section de raccordement (36) d'un desdits éléments pouvant être raccordés (12) est pourvue de trous (64, 66) pour l'entrée et la sortie de liquide de lavage.

9. Dispositif selon la revendication 1, **caractérisé en ce que** l'élément de serrage (44) comprend une surface avant cylindrique (49), qui empêche la sortie de l'élément de serrage (44) à partir du trou respectif (42) lorsque les éléments pouvant être raccordés (12, 14) sont connectés l'un à l'autre.
